# EUROPEAN PATENT APPLICATION

(11) **EP 1 933 016 A2**
(43) Date of publication of application: **18.06.2008**
(21) Application number: 07254874.6
(22) Date of filing: 14.12.2007
(51) Int. Cl.: F02B 55/02

(54) **Rotors having flow-modifying members for use in rotary engines**

(30) Priority: 15.12.2006 US 639913; 05.12.2007 US 999280
(71) Applicant: United Technologies Corporation, Hartford, CT 06101 (US)
(72) Inventor: Morrison, Calvin Q., Thousand Oaks, CA 91362 (US); Havskjold, Glenn L., Thousand Oaks, CA 91362 (US)
(74) Representative: Tomlinson, Kerry John

(57) **Abstract**

A rotor for use in a rotary internal combustion engine comprises an opening (28) configured to receive an output shaft, a plurality of faces (32, 34, 36) disposed circumferentially around the opening, a recessed pocket (46) disposed in one of the faces, and a flow-modifying member (48) secured to the one face. The flow-modifying member modifies fuel/air flow within the recessed pocket, and controls fuel/air mixing in a combustion chamber adjacent the recessed pocket.

## Description

### BACKGROUND OF THE INVENTION

The present invention relates to rotary internal combustion engines of the Wankel type. In particular, the present invention relates to augmentation and control of the combustion rates of rotary internal combustion engines.

Wankel-type rotary engines typically include a three-faced rotor disposed within an epitrochoid housing. The rotor rotates within the housing, dividing the housing into three chambers. Each face of the rotor effectively functions in the same manner as a piston in a piston engine. While rotating, the faces of the rotor continuously move toward and away from the housing, which respectively compresses and expands gases contained in the chambers.

The rotor rotates around an eccentrically-lobed shaft, which allows the rotor to move around the housing to create the four strokes of the typical Otto or Diesel cycle. During the intake phase, the rotor draws a fuel/air mixture into the housing. As the rotor rotates, one of the faces of the rotor compresses the fuel/air mixture against the housing. The compressed mixture cycles around the housing until it reaches an ignition source (e.g., a spark plug) or until the compression ratio is high enough to produce compression ignition. After ignition the fuel/air mixture expands as a combustion gas, which drives the rotor in a power stroke. The rotor then cycles the expanded combustion gas to an exhaust port.

During the combustion phase, the combustion chamber defined by the rotor and the housing is typically long and narrow, and may create a pinch point between the rotor and the housing. This limits flame propagation, reducing the amount of the compressed fuel/air mixture available for combustion. There is thus a need for a rotary engine that provides control over flame propagation and fuel/air mixing, in order to increase combustion efficiency.

### BRIEF SUMMARY OF THE INVENTION

The present invention relates to a rotor for use in a rotary internal combustion engine. The rotor includes a plurality of faces disposed circumferentially around a shaft opening, a recessed pocket disposed in at least one of the faces, and at least one flow-modifying member secured to the at least one face.

### BRIEF DESCRIPTION OF THE DRAWINGS

FIG. 1 is a front schematic illustration of a rotary engine having a rotor of the present invention.
FIG. 2 is a top perspective view of the rotor in FIG. 1.
FIG. 3A is a top view of the rotor in FIG. 2, showing a set of ramp-shaped flow-modifying members disposed within a recessed pocket.
FIG. 3B is a sectional view along line 3B-3B of FIG. 3A, showing one of the ramp-shaped members disposed within the recessed pocket.
FIG. 3C is another sectional view along line 3B-3B of FIG. 3A, showing an alternative ramp-shaped member extending above the recessed pocket.
FIG. 4 is a top view of a first alternative rotor with a set of tapered, ramp-shaped flow-modifying members disposed within a recessed pocket.
FIG. 5 is a top view of a second alternative rotor, with a set of V-shaped flow-modifying members disposed within a recessed pocket.
FIG. 6 is a top view of a third alternative rotor, with a set of bluff body flow-modifying members disposed within a recessed pocket.
FIG. 7 is a top view of a fourth alternative rotor, with a set of diagonal ramp-shaped flow-modifying members disposed within a recessed pocket.
FIG. 8A is a top view of a fifth alternative rotor, with a ramp-shaped flow-modifying member disposed adjacent a recessed pocket.
FIG. 8B is a sectional view along line 8B-8B of FIG. 8A, further illustrating the ramp and recessed pocket.
FIG. 8C is another sectional view along line 8B-8B of FIG. 8A, showing an alternative bulged ramp disposed adjacent the recessed pocket.
FIG. 9A is a top view of a sixth alternative rotor, with a ramp-shaped flow-modifying member disposed between a pair of recessed pockets.
FIG. 9B is a sectional view along line 9B-9B of FIG. 9A, further illustrating the ramp and recessed pockets.
FIG. 10 is a top view of a seventh alternative rotor, with multiple indented flow-modifying members disposed within a recessed pocket.
FIG. 11 is a sectioned perspective view of a dual-rotor rotary engine having a rotor of the present invention.

### DETAILED DESCRIPTION

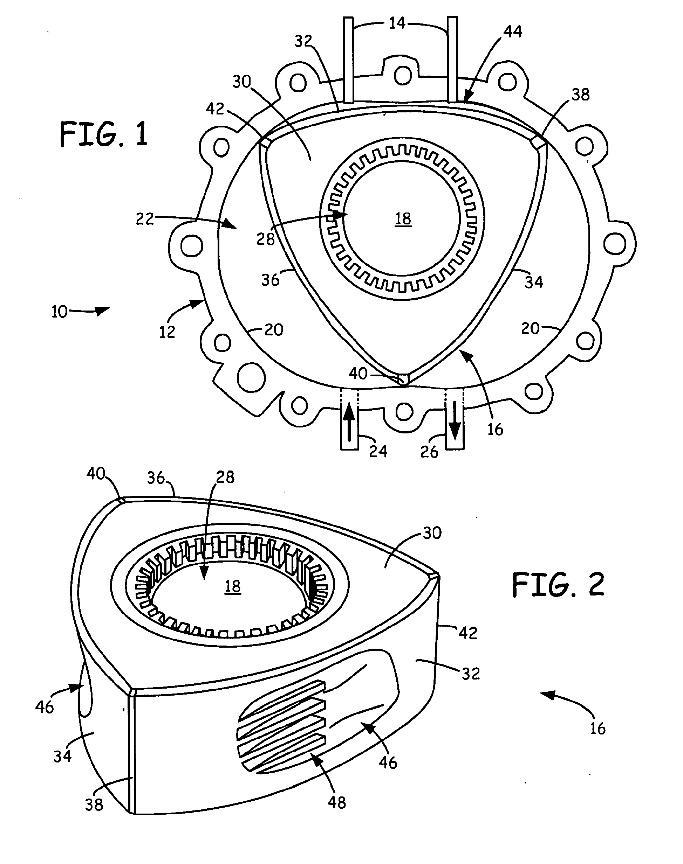

FIG. 1 is a front schematic illustration of engine 10. Engine 10 is a rotary internal combustion engine that includes housing 12, ignition sources 14, rotor 16, and output shaft 18. Housing 12 includes inner surface 20, which defines epitrochoid-shaped rotor chamber 22. Housing 12 also includes intake port 24, for drawing a fuel/air mixture into rotor chamber 22, and exhaust port 26, for emitting exhaust gases from rotor chamber 22.

In an alternative embodiment, one or both of intake port 24 and exhaust port 26 are located in an end wall of housing 12. In a further alternative embodiment, engine 10 is a fuel injected engine, in which intake port 24 draws air into rotor chamber 22, and the compressed fuel/air mixture is created by injecting fuel directly into combustion chamber 44, which is the region of rotor chamber 22 proximate ignition sources 14 and in which combustion occurs. Alternatively, fuel is injected into another region of rotor chamber 22, as defined in another location between rotor 16 and housing 12.

Ignition sources 14 are a pair of combustion-inducing components (e.g., spark plugs) disposed in housing 12, generally opposite intake port 24 and exhaust port 26. In an alternative embodiment, engine 10 is a compression ignition engine, which precludes the need for ignition sources 14.

Rotor 16 is a three-faced rotor disposed within chamber 22, and includes shaft opening (or aperture) 28, front surface 30, faces 32, 34 and 36, and apices 38, 40 and 42. Shaft opening 28 is a central aperture extending through rotor 16, from front surface 30 to an opposing back surface which is not shown. Rotor faces 32, 34, and 36 are disposed perpendicularly to front surface 30, and extend circumferentially around shaft opening 28. As shown, faces 32 and 34 intersect at apex 38, faces 34 and 36 intersect at apex 40, and faces 32 and 36 intersect at apex 42.

Output shaft 18 is an eccentrically-lobed shaft disposed within housing 12 with an eccentric lobe extending through shaft opening 28, so that rotor 16 is eccentrically mounted on output shaft 18. The eccentric mounting allows rotor 16 to rotate within the epitrochoid shape of rotor chamber 22, while apices 38, 40, and 42 remain in contact with inner surface 20 of housing 12.

In operation of rotary engine 10, rotor 16 executes a four-stroke combustion cycle within housing 12. As rotor 16 rotates, a fuel/air mixture is drawn in through intake port 24, and then compressed into a reduced volume against inner surface 20 of housing 12 as the mixture cycles toward ignition sources 14.

Ignition sources 14 ignite the compressed fuel/air mixture. The ignition is either simultaneous, or occurs at staged intervals corresponding to different crank angles, in order to control the rate and direction of combustion gas flow through a pinch point that forms between rotor 16 and housing 12. In the alternative compression-ignition embodiment of engine 10 (discussed above), compression heats the fuel/air mixture sufficiently to cause ignition, without the need for sources 14.

As the ignited fuel/air mixture (the combustion gas) expands, it induces further rotation of rotor 16, until the expanded combustion gas exits rotor chamber 22 through exhaust port 26. Rotor 16 provides torque to output shaft 18 via the eccentric mount, generating rotational energy.

As shown in FIG. 1, the intersections of apex 38 and apex 42 with inner surface 20 define combustion section (or combustion chamber) 44 between face 32 of rotor 16 and inner surface 20 of housing 12. The volume of combustion section 44 is narrow and long, which can reduce combustion efficiency by restricting flow and slowing the ignition front. As discussed below, rotor 16 provides at least one flow-modifying member to control fuel/air mixing and flame propagation. This reduces the effects of flow restriction, raising combustion efficiency and increasing power output.

FIG. 2 is a top perspective view of rotor 16, where each face 32, 34 and 36 includes recessed pockets 46 and ramps 48. Recessed pockets 46 are recessed portions within faces 32, 34 and 36, which reduce the risk of forming pinch points when faces 32, 34 and 36, respectively, form combustion sections with inner surface 20 (e.g., combustion section/combustion chamber 44, shown in FIG. 1). In an alternative embodiment, one or more of recessed pockets 46 exhibits another shape, rather than the rectangular shape shown in FIG. 2 (e.g., a pear shape). Additionally, one or more of recessed pockets 46 is sometimes located closer to an apex (e.g., apex 38, 40 or 42) rather than being centered within a face (e.g., face 32, 34 or 36).

Ramps 48 are a set of substantially parallel, ramp-shaped flow-modifying members extending from any of faces 32, 34 or 36, along any recessed pocket 46. Ramps 48 are beneficial for controlling fuel/air mixing and flame propagation during combustion, by generating vortex flows and increasing turbulence in the compressed fuel/air mixture.

In some embodiments, ramps 48 are integrally formed with face 32, 34 or 36 during a molding or casting process. Alternatively, separately formed flow-modifying members are secured to the face. In either embodiment, the flow-modifying members are variously disposed adjacent recessed pocket 46, completely within the recessed pocket, or partially within the recessed pocket.

Rotor 30 rotates clockwise relative to engine housing 12 of FIG. 1. The overall motion of the fuel/air mixture is also clockwise, and proceeds through the volumes between surfaces 32 and 20, 34 and 20, and 36 and 20. Relative to rotor face 32, however, the fuel/air mixture in combustion chamber 44 flows either in the direction from apex seal 42 toward apex seal 38, or in the direction from apex seal 38 toward apex seal 42, depending on where combustion is initiated and on the burn and expansion rates.

In general, ramps 48 start on the side of recessed pocket 46 that is upstream in terms of the relative fuel/air flow, and extend to a downstream end where they abruptly truncate or terminate. This contrasts with previous designs in which the flow-modifying members extend in a different direction, and contrasts with previous designs in which the flow-modifying members do not have abrupt downstream terminations. These previous designs are directed to flow modification within a recessed pocket, whereas ramps 48 and the other flow-modifying structures described here are directed to flow in the pocket and throughout the adjacent combustion chamber.

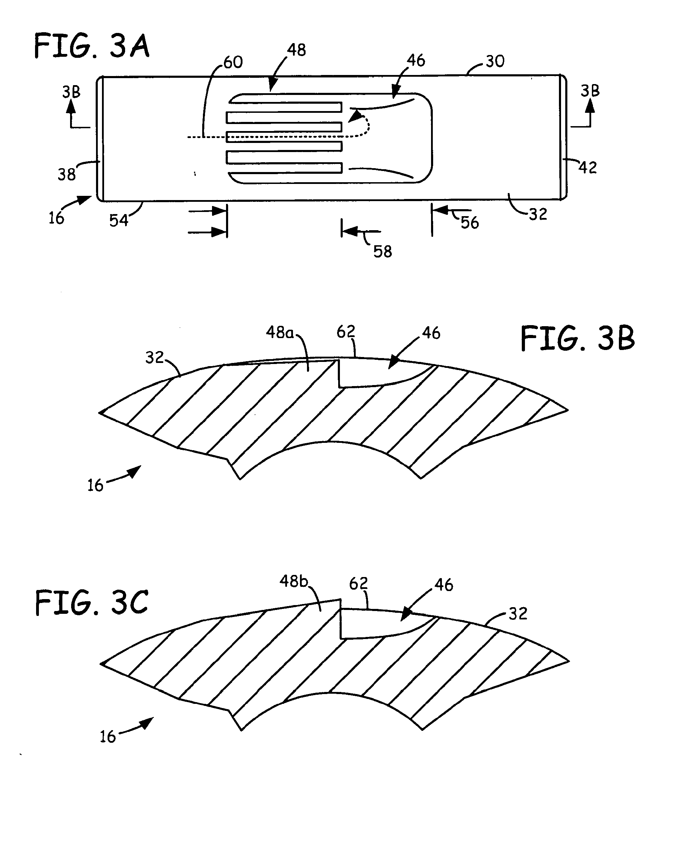

FIG. 3A is a top view of rotor 16 showing rear portion 54, which is an opposing surface with respect to front portion 30. The direction of fuel/air flow is illustrated by arrow 60. Ramps 48 generate vortices and increase turbulence in this flow.

As shown in the figure, recessed pocket 46 has a length along face 32 (referred to as length 56), and ramps 48 each have a length within recessed pocket 46 (referred to as length 58). Suitable lengths for length 58 range from about 25% of length 56 to about 75% of length 56. Particularly suitable lengths for length 58 range from about 30% of length 56 to about 50% of length 56.

In further embodiments, one or more ramps 48 have different lengths from other ramps 48. While rotor 16 is shown with four ramps 48, furthermore, rotor 16 alternatively includes a lesser or greater number of ramps 48, based on a desired combustion rate.

FIGS. 3B and 3C are alternative sectional views along line 3B-3B of FIG. 3A. As shown in FIG. 3B, recessed pocket 46 has a peripheral edge with face 32 at rim 62. In this embodiment, ramp section 48a does not extend above rim 62 and ramps 48 are retained entirely within recessed pocket 46. In the embodiment of FIG. 3C, on the other hand, ramp section 48b extends above rim 62 and ramps 48 extend (or project) beyond recessed pocket 46.

Each of these embodiments provides a different flow path for the compressed fuel/air mixture. In additional embodiments, each individual ramp 48 extends either above or below rim 62, in order to provide other desired flow patterns. In general, the lengths and heights of each ramp 48 are individually configurable to control the fuel/air mixture and rate of flame propagation, and this control extends both to recessed pocket 46 and to the combustion chamber adjacent the pocket (e.g., combustion section/combustion chamber 44, as shown in FIG. 1).

Each of ramps 48 defines a protruding surface which is distinct from the rotor face, and distinct from the recessed pocket. Flow vorticity is generated by flow spilling off the protruding surface and propagating throughout the combustion chamber, producing rapid yet controlled flame propagation outside of the recessed pocket. This distinguishes from previous designs in which flow-modifying members coextend with the rim, the rotor face, or along the bottom of the recessed pocket, and distinguishes from previous designs in which the flow modifications are directed to flow within a recessed pocket, trough, or channel. This distinctive feature is not limited to the particular configuration of ramps 48, but is shared by each of the flow-modifying members and structures described herein.

The protruding surfaces defined by ramps 48 also terminate abruptly. This generates flow separation, vorticity, and turbulence, which propagate downstream to mix combustion gases in a three-dimensional manner throughout both pocket 46 and the combustion chamber between rotor surface 32 and housing wall 20. This distinguishes from previous structures that do not terminate abruptly, and from previous structures directed toward two-dimensional flow modifications that are defined substantially parallel to the rotor face.

The flow-modifying structures described herein also distinguish from previous designs that are directed toward channeling fuel/air mixture flows within rotor surface features such as grooves, channels or gutters, and from designs directed to vorticity within recessed pockets or chambers in the surface of the rotor. The flow-modifying members described herein, in contrast, are directed toward three-dimensional flow effects that propagate in a downstream direction, extending not only within the recessed pocket but also into regions of the combustion chamber outside the recessed pocket.

The flow-modification designs described herein are moreover not limited to stopping and turning of the flow, nor to generating turbulence within channels and recessed pockets. Instead, these structures generate flow separation and vorticity via flow spillage off abrupt terminations and/or surfaces that protrude from the rotor face into the fuel/air mixture flow, which surfaces are distinct from the bottom of the recessed pocket, and distinct from the rotor surface.

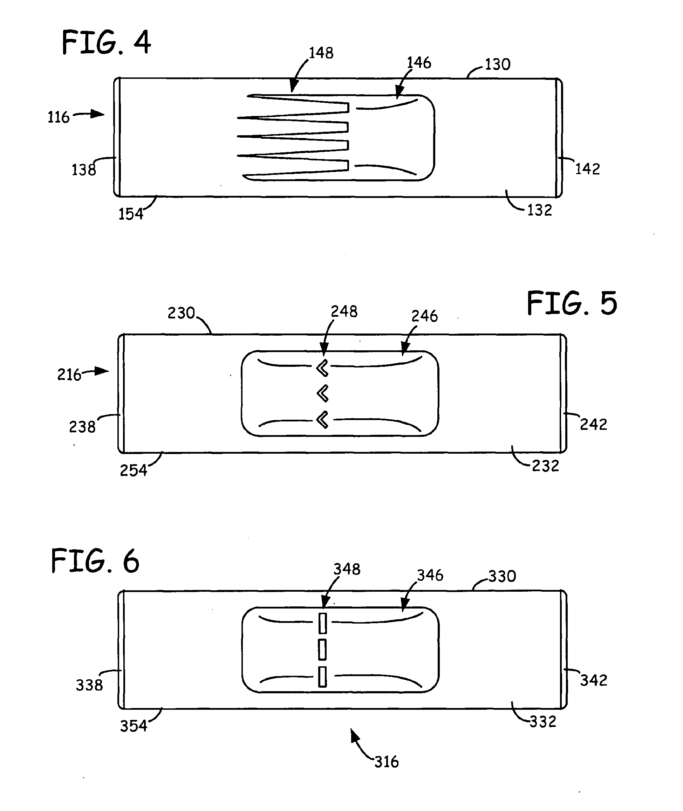

FIGS. 4-7 are top views of alternatives to rotor 16, with corresponding reference numbers increased by 100, 200, 300 and 400, respectively. Each alternative rotor includes alternative flow-modifying members that distinguish from previous designs.

As shown in FIG. 4, rotor 116 includes tapered ramps 148, which are a set of tapered, ramp-shaped flow-modifying members extending from face 132 within recessed pocket 146. Suitable lengths and heights for tapered ramps 148 include those discussed above for ramps 48, but tapered ramps 148 provide different flow patterns.

As shown in FIG. 5, rotor 216 includes V-bars 248, which are a set of V-shaped flow-modifying members extending orthogonally from recessed pocket 246. In this embodiment, each V-bar 248 has an apex directed into the flow of the compressed fuel/air mixture. The flow path splits at each V-bar 248, and is subject to detachment at each abrupt termination. This increases the flame propagation rate and generates vortex flows and turbulence in the fuel/air mixture, as discussed above.

The dimensions of V-bars 248 vary in order to obtain a desired combustion rate. In particular, individual V-bars 248 extend either above or below the rim of recessed pocket 246, defining a level that is distinct from that of the rotor face and recessed pocket. While rotor 216 is shown in FIG. 5 with three V-bars 248, moreover, rotor 216 alternatively includes more V-bars, as variously provided in a number of parallel or staggered rows, or fewer V-bars, such as a pair of V-bars 248 or a single V-bar 248.

As shown in FIG. 6, rotor 316 includes bluff bodies 348, which are a set of rectangular flow-modifying members extending orthogonally from recessed pocket 346. Bluff bodies 348 block the flow path of the compressed fuel and air, forcing the mixture to travel laterally and encouraging flow separation at an abrupt termination on the downstream end. This increases flame propagation, generates vortex flows, and increases turbulence in the fuel/air mixture, both within the recessed pocket and in the combustion chamber/combustion section adjacent the recessed pocket.

As with other flow-modifying members described herein, the dimensions of bluff bodies 348 vary as necessary (e.g., above and below the rim of recessed pocket 346), in order to obtain a desired combustion rate. In general, the flow modifying members are configurable to extend along a surface that is distinct from the rotor face, and distinct from the bottom of the recessed pocket. While rotor 316 is shown in FIG. 6 with three bluff bodies 348, furthermore, rotor 316 alternatively includes more or fewer bluff bodies, such as a single bluff body 348, or a number of parallel or staggered rows of bluff bodies 348.

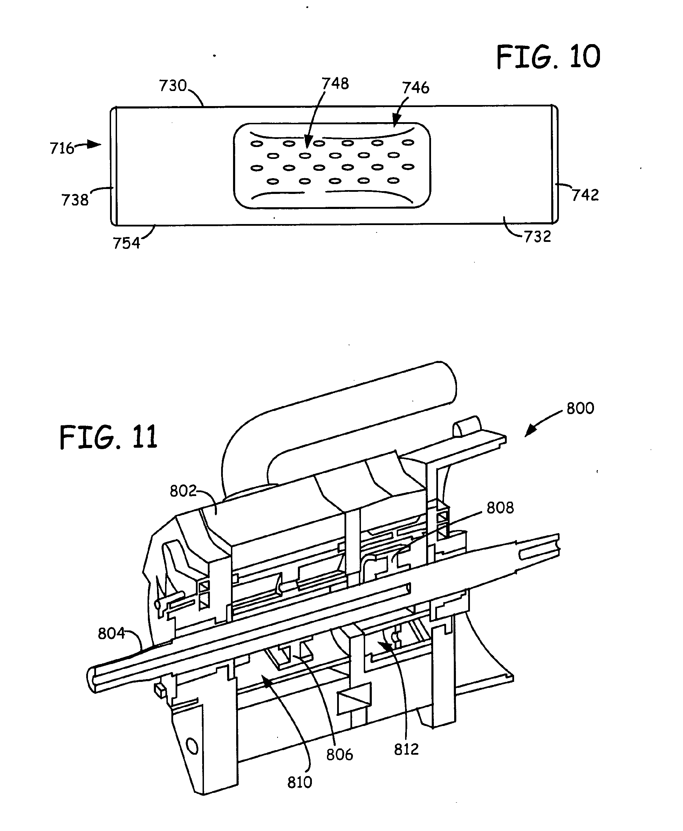

As shown in the figures, each ramp, V-bar, and bluff body terminates abruptly, creating flow separation, vorticity, and turbulence that detach from the flow-modifying member and propagate downstream to mix combustion gases in a three-dimensional manner throughout pocket 346. The effects also propagate into a combustion chamber adjacent the recessed pocket, as defined between the rotor surface and the housing wall (see, e.g., combustion chamber/combustion section 44 of FIG. 1, above, and combustion chamber/combustion section 812 of FIG. 11, below). This distinguishes from previous designs that do not terminate abruptly, or are directed toward two-dimensional flow modifications that do not extend substantially beyond a recessed pocket into an adjacent combustion chamber.

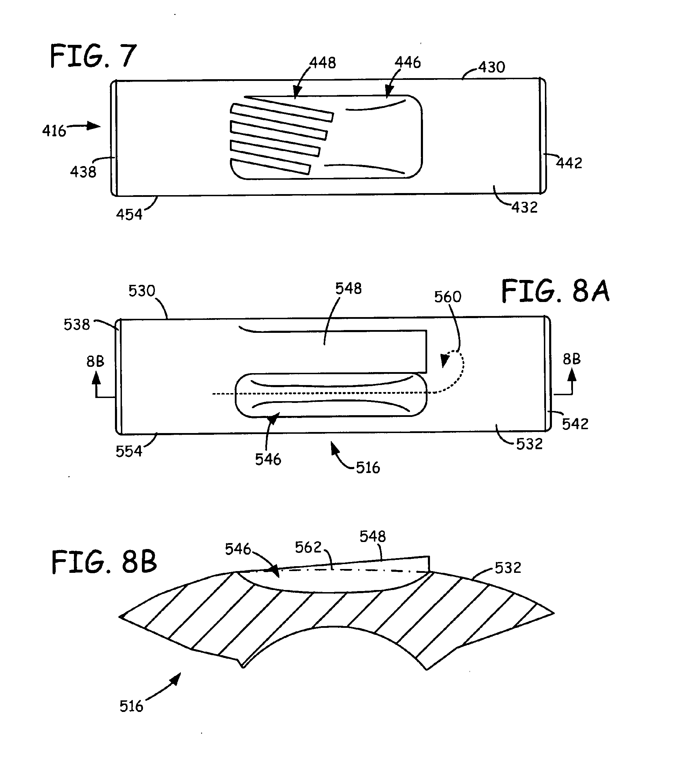

As shown in FIG. 7, rotor 416 includes skewed or swept ramps 448, which are a set of substantially parallel, diagonal, ramp-shaped flow-modifying members extending from face 432 within recessed pocket 446. Skewed ramps 448 are beneficial for inducing swirl in the compressed fuel/air mixture in the combustion chamber. Suitable dimensions for swept ramps 448 include those discussed above for ramps 48 of FIGS. 2 and 3A-3C.

FIG. 8A is a top view of rotor 516, showing another alternative to rotor 16 in which corresponding reference numbers are increased by 500. Rotor 516 includes recessed pocket 546 and ramp 548, where ramp 548 is a single ramp-shaped flow-modifying member extending from face 532 adjacent to recessed pocket 546.

In this embodiment, ramp 548 impedes the flow of the compressed fuel/air mixture, directing the mixture into and over recessed pocket 546. This is beneficial for generating vortex flows and turbulence that extend into the combustion chamber adjacent rotor face 532, as illustrated by arrow 560, as well as within recessed pocket 546.

In particular, FIG. 8A illustrates that the effects of the flow-modifying members described herein are not limited to substantially two-dimensional flow modifications parallel to the rotor face, but also include three-dimensional flow components that are substantially perpendicular to the rotor face. This distinguishes from structures directed to modifying flow within a recessed pocket, and from structures directed to vortex or turbulent flows that are substantially parallel to the rotor face. These distinctive elements are characteristic of each flow modifying member and structure described herein.

FIG. 8B is a sectional view along line 8B-8B of FIG. 8A, further illustrating recessed pocket 546 and ramp 548. As shown, ramp 548 extends above rim 562 of recessed pocket 546 (shown in phantom). As a result, the flow path of the compressed fuel/air mixture is directed into and over recessed pocket 546.

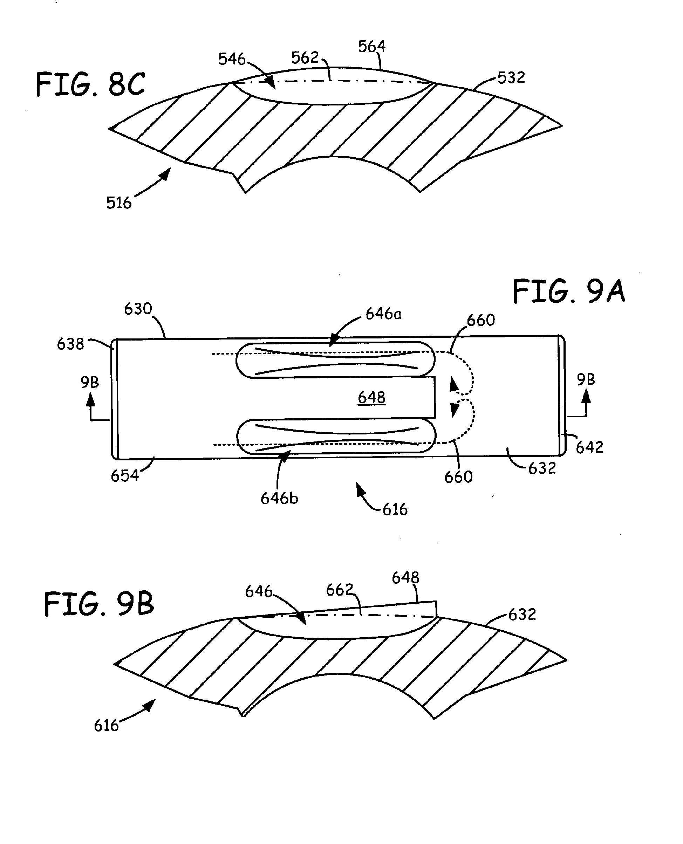

FIG. 8C is another sectional view along line 8B-8B of FIG. 8A, showing an alternative embodiment of rotor 516 that includes bulged-ramp 564 in lieu of ramp 548. Bulged ramp 564 a single bulge-shaped flow-modifying member extending from face 532, disposed adjacent to recessed pocket 546. Bulged ramp 564 functions analogously to ramp 548, generating vortex flows and turbulence adjacent face 532, and within and over recessed pocket 546.

FIG. 9A is a top view of rotor 616, showing another alternative to rotor 16 with corresponding reference labels increased by 600. Rotor 616 includes ramp 648, which is a single ramp-shaped flow-modifying member extending from rotor face 632 between two recessed pockets 646a and 646b.

In this embodiment, the compressed fuel/air mixture is directed laterally around ramp 648, and into and over recessed pockets 646a and 646b. This configuration generates vortex flows and turbulence with components perpendicular to adjacent face 632, and modifies flow both within recessed pockets 646a and 646b and in the combustion chamber adjacent the recessed pockets, as illustrated by arrows 660.

FIG. 9B is a sectional view along line 9B-9B of FIG. 9A, further illustrating the recessed pockets and ramp 648. Ramp 648 extends above rim 662 (shown in phantom) of the recessed pockets, which are both represented by pocket 646. This configuration directs the fuel/air flow into and over each of the two recessed pockets. In an alternative embodiment, ramp 648 is replaced with bulged ramp 564 of FIG. 8C, with analogous effect.

FIG. 10 is a top view of rotor 716, showing another alternative to rotor 16 with corresponding reference labels increased by 700. Rotor 716 includes dimples 748, which are a set of indented flow-modifying members disposed within recessed pocket 746. Dimples 748 increase flame propagation rates by generating vortex flow and turbulence in the fuel/air mixture.

As shown in FIG. 10, rotor 716 is provided with a field of staggered dimples 748 within recessed pocket 746. In other embodiments the number of dimples 748 varies, and they are provided either within the pocket, adjacent the pocket, or both. In embodiments having a plurality of dimples 748, they are variously provided in a single row or in multiple rows, which are staggered, aligned, or distributed in an aperiodic fashion.

In additional alternative embodiments, dimples 748 represent one or more grooves or troughs. In these embodiments, multiple grooves or troughs are provided as a staggered field, in a single row, in multiple, parallel roads, or are aperiodically distributed.

In each of these embodiments, the flow modifying members define a surface that is distinct from the level of the rotor face and distinct from the level of the recessed pocket. The flow-modifying members generate three-dimensional vortex flows and turbulence with components that are perpendicular to the surface of the rotor face, and which modify the flow of combustion gas both within the recessed pocket, and in the combustion chamber adjacent the recessed pocket.

FIG. 11 is a sectioned perspective view of engine 800, which is a rotor-compounded internal combustion engine for use with the rotors described herein. Engine 800 includes housing 802, output shaft 804, pre-compression rotor 806, and combustion rotor 808.

Output shaft 804 extends through pre-compression compartment 810 and combustion compartment 812, which are defined by housing 802. Pre-compression rotor 806 and combustion rotor 808 are disposed within pre-compression compartment 810 and combustion compartment 812, respectively, and each is eccentrically mounted to output shaft 804, as described above. Pre-compression rotor 806 partially compresses air or a fuel/air mixture within pre-compression compartment 810. Combustion rotor 808 performs a four-stroke internal combustion cycle, utilizing one or more flow-modifying members to improve combustion efficiency as described above.

Specifically, pre-compression rotor 806 rotates to draw air or a fuel/air mixture into pre-compression compartment 810, where it is partially compressed by pre-compression rotor 806. The partially compressed air or fuel/air mixture is directed to combustion compartment 812, where it is fully compressed and then ignited. The flow-modifying members of combustion rotor 808 control fuel/air mixing, flame propagation, and other aspects of the combustion process, as discussed above. Combustion rotor 808 then drives exhaust gases back into pre-compression compartment 810, where they expand to assist in rotating pre-compression rotor 806. This pre-compression arrangement increases the efficiency of engine 800, providing for greater rotational power and/or reduced fuel consumption.

The present invention has been described with reference to preferred embodiments. The terminology used is for the purposes of description, not limitation, and workers skilled in the art will recognize that changes may be made in form and detail without departing from the scope of the invention, which is defined by the claims and their equivalents.

## Claims

1. A rotor for use in a rotary internal combustion engine, the rotor comprising:
an opening configured to receive an output shaft;
a plurality of faces disposed circumferentially around the opening;
a recessed pocket disposed in at least one of the faces; and
a flow-modifying means on the at least one face for modifying a fluid flow path within the recessed pocket, and for creating turbulence in a combustion section adjacent the recessed pocket.

2. The rotor of claim 1, wherein the flow-modifying means is at least partially disposed within the recessed pocket.

3. The rotor of claim 1, wherein the flow-modifying means is disposed adjacent to the recessed pocket.

4. The rotor of claim 1, 2 or 3, wherein the flow-modifying means comprises a ramp-shaped member.

5. The rotor of claim 1, 2, 3 or 4, wherein the flow-modifying means comprises a plurality of ramp-shaped members.

6. A rotor for a rotary internal combustion engine, the rotor comprising:
a plurality of rotor faces, wherein at least one rotor face defines a combustion chamber between the one face and a rotor housing;
a recessed pocket disposed in the at least one face; and
a flow-modifying member provided on the at least one face, wherein the flow-modifying member creates three-dimensional vorticity that propagates in a downstream direction from the flow-modifying member.

7. The rotor of claim 6, wherein the flow-modifying member protrudes into a fuel/air mixture flow.

8. The rotor of claim 7, where the flow-modifying member defines a surface that is distinct from the one rotor face, and distinct from the recessed pocket.

9. The rotor of claim 8, wherein the flow-modifying member has an abruptly terminated downstream end.

10. The rotor of claim 7, wherein the flow-modifying member comprises a ramp.

11. The rotor of claim 10, wherein the flow-modifying member comprises a plurality of ramps.

12. The rotor of claim 10, wherein the flow-modifying member extends for a length that is between about 25% and about 75% of a length of the recessed pocket.

13. The rotor of claim 12, wherein the flow-modifying member extends for a length that is between about 30% and about 50% of the length of the recessed pocket.

14. The rotor of any of claims 6 to 13, wherein the flow-modifying member comprises at least one bluff body.

15. The rotor of any of claims 6 to 14, wherein the flow-modifying member comprises at least one V-shaped structure with an apex directed into the fuel/air mixture flow.

16. The rotor of any of claims 6 to 15, wherein the flow-modifying member is disposed adjacent to the recessed pocket.

17. The rotor of any of claims 6 to 15, wherein the flow-modifying member is at least partially disposed within the recessed pocket.

18. A rotary internal combustion engine comprising:
an engine housing;
an output shaft extending through the engine housing;
a rotor eccentrically mounted to the output shaft, the rotor comprising:
a rotor face that rotates to define a combustion chamber between the rotor face and the engine housing;
a recessed pocket disposed in the rotor face; and
a flow-modifying member disposed on the rotor face, wherein the flow-modifying member creates turbulence to control combustion within the recessed pocket and within the combustion chamber.

19. The rotary internal combustion engine of claim 18, wherein the flow-modifying member protrudes into a fuel-air flow.

20. The rotary internal combustion engine of claim 19, wherein the flow-modifying member has an abruptly terminated downstream end.

21. The rotary internal combustion engine of claim 18, wherein the flow-modifying member comprises a ramp.

22. The rotary internal combustion engine of claim 18, 19, 20 or 21, further comprising a second rotor eccentrically mounted to the output shaft to provide pre-compression.

23. A method for modifying combustion fuel-air flow in a rotary internal combustion engine, the method comprising:
providing a rotor with a plurality of rotor faces;
providing a recessed pocket in at least one of the rotor faces; and
providing a flow-modifying member proximate the recessed pocket, wherein the flow-modifying member protrudes into the fuel-air flow and terminates abruptly in order to modify the fuel-air flow in the recessed pocket and in a combustion chamber adjacent the recessed pocket.

24. The method of claim 23, wherein providing the flow-modifying member comprises providing at least one ramp that defines a surface that is distinct from the rotor face and distinct from the recessed pocket.

25. The method of claim 23, wherein providing the flow-modifying member comprises forming the flow-modifying member as a unitary structure with the rotor face.
